# EUROPEAN PATENT APPLICATION

(11) **EP 2 950 536 A1**
(43) Date of publication of application: **02.12.2015**
(21) Application number: 15169559.0
(22) Date of filing: 28.05.2015
(51) Int. Cl.: H04N 19/176, H04N 19/119, H04N 19/61, H04N 19/156, H04N 19/44

(54) **VIDEO DECODING METHOD AND VIDEO DECODER**

(30) Priority: 30.05.2014 CN 201410240979
(71) Applicant: Huawei Technologies Co., Ltd., Longgang District Shenzhen, Guangdong 518129 (CN)
(72) Inventor: Zhang, Zhiming, 518129 Shenzhen (CN); Yu, Zhixiang, 518129 Shenzhen (CN); Zhao, Riyang, 518129 Shenzhen (CN)
(74) Representative: Haley, Stephen

(57) **Abstract**

Embodiments of the present invention disclose a video decoding method, where the method includes: respectively converting a transform unit and a prediction unit that are obtained after decoding of a video compression bitstream into an M x M residual block and an M x M prediction block, where M = 16, 8, or 4, and the video compression bitstream includes any one of an HEVC bitstream, a VP9 bitstream, and an AVS2.0 bitstream; obtaining a reconstructed picture block according to the residual block and the prediction block; and obtaining a decoded reconstructed picture by performing filtering on the reconstructed picture block. The embodiments of the present invention further disclose a video decoder. The present invention is used to reduce module development of a multi-protocol video decoder and reduce dimensions and power consumption of the video decoder.

## Description

### TECHNICAL FIELD

The present invention relates to the field of picture processing, and in particular, to a video decoding method and a video decoder.

### BACKGROUND

Video compression technologies are widely applied to fields of the Internet, television broadcasting, storage medium, and communications. Since the MPEG (Moving Picture Experts Group) standard in 1993, various video compression formats coexist after years of inheritance and development. Until now, one commercial video decoder needs to support more than ten video compression formats such as MPEG-1, MPEG-2, MPEG-4, H.263, H.264, H.265, Real8, Real9, VC1, AVSP2, VP8, VP9, and DIVX. This brings a great challenge to a video decoder and particularly imposes a harsh requirement on dimensions and power consumption of the video decoder in terms of hardware because of the rise of intelligent devices.

In protocols prior to 2013, such as (MPEG-1, MPEG-2, MPEG-4, H.263, H.264, Real8, Real9, VC1, AVSP2, VP8, VP9, and DIVX), a 16 x 16 macroblock is used as a basic pixel unit to partition and compress a video picture, and a method for internally partitioning and compressing the macroblock is different in various protocols.

However, a new video compression protocol emerges after 2013, such as HEVC (High Efficiency Video Coding, High Efficiency Video Coding), VP9, or AVS (Audio Video Coding Standard, Audio Video coding Standard) 2.0, a new picture partition format is put forward, and for a basic pixel unit of the new picture partition format, there are a large block that is larger than the macroblock and a small block that is smaller than the macroblock, thereby increasing complexity and difficulty of video decoder design. At present, multiple decoding cores that support the new protocol are often independently designed for this video decoder to resolve problems. However, dimensions and power consumption of this video decoder that includes the multiple independent decoding cores multiply, and a development period is extended.

### SUMMARY

To resolve the technical problem, embodiments of the present invention provide a video decoding method and a video decoder, which can overcome deficiencies of a long development period, large chip dimensions, and high power consumption of a multi-protocol video decoder in the prior art.

To resolve the foregoing technical problems, a first aspect of an embodiment of the present invention provides a video decoding method, including:
respectively converting a transform unit and a prediction unit that are obtained after decoding of a video compression bitstream into an M x M residual block and an M x M prediction block, where M=16, 8, or 4, and the video compression bitstream includes any one of an HEVC bitstream, a VP9 bitstream, and an AVS2.0 bitstream;
obtaining a reconstructed picture block according to the residual block and the prediction block; and
obtaining a decoded reconstructed picture by performing filtering on the reconstructed picture block.

With reference to the first aspect, in a first possible implementation manner, before the step of respectively converting a transform unit and a prediction unit that are obtained after decoding of a video compression bitstream into an M x M residual block and an M x M prediction block, the method further includes:
parsing out, by entropically decoding the video compression bitstream, a syntax element that includes a motion vector and a transform coefficient;
performing inverse scanning, dequantizing, and inverse transformation on the transform coefficient to obtain the transform unit; and
performing inter-frame motion compensation according to the motion vector and a reference picture or performing intra-frame motion compensation according to an intra-frame prediction picture, so as to obtain the prediction unit.

With reference to the first aspect or the first possible implementation manner, in a second possible implementation manner, M = 16, and the respectively converting a transform unit and a prediction unit that are obtained after decoding of a video compression bitstream into an M x M residual block and an M x M prediction block specifically includes:
acquiring multiple code units of a to-be-decoded code tree block, where a size of each code unit is 2^{N} x 8 x 8, and N = 0, 2, 4, or 8; each code unit includes at least one prediction unit or at least one transform unit;
if N = 0, combining four code units of the code tree block into one prediction block or residual block; or
if N = 2, directly using each code unit of the code tree block as one prediction block or residual block; or
if N = 4, partitioning each code unit of the code tree block into four prediction blocks or residual blocks; or
if N = 8, partitioning each code unit of the code tree block into 16 prediction blocks or residual blocks.

With reference to the second possible implementation manner of the first aspect, in a third possible implementation manner, after the respectively converting a transform unit and a prediction unit that are obtained after decoding of a video compression bitstream into an M x M residual block and an M x M prediction block, the method further includes:
performing pixel interpolation processing on the prediction block.

With reference to any one of the first aspect to the third possible implementation manner, in a fourth possible implementation manner, the obtaining a decoded reconstructed picture by performing filtering on the reconstructed picture block specifically includes:
obtaining the decoded reconstructed picture by performing de-blocking filtering on the reconstructed picture block.

Correspondingly, a second aspect of an embodiment of the present invention further provides a video decoder, including:
a converting module, configured to respectively convert a transform unit and a prediction unit that are obtained after decoding of a video compression bitstream into an M x M residual block and an M x M prediction block, where M = 16, 8, or 4, and the video compression bitstream includes any one of an HEVC bitstream, a VP9 bitstream, and an AVS2.0 bitstream;
a reconstructing module, configured to obtain a reconstructed picture block according to the residual block and the prediction block; and
a filtering module, configured to obtain a decoded reconstructed picture by performing de-blocking filtering on the reconstructed picture block.

With reference to the second aspect, in a first possible implementation manner, the video decoder further includes:
a bitstream parsing module, configured to parse out, by entropically decoding the video compression bitstream, a syntax element that includes a motion vector and a transform coefficient;
an inverse transformation module, configured to perform inverse scanning, dequantizing, and inverse transformation on the transform coefficient to obtain the transform unit; and
a prediction module, configured to perform inter-frame motion compensation according to the motion vector and a reference picture or perform intra-frame motion compensation according to an intra-frame prediction picture, so as to obtain the prediction unit.

With reference to the second aspect or the first possible implementation manner, in a second possible implementation manner, M = 16, and the converting module is specifically configured to acquire multiple code units of a to-be-decoded code tree block, where a size of each code unit is 2^{N} x 8 x 8, and N = 0, 2, 4, or 8; each code unit includes at least one prediction unit or at least one transform unit;
if N = 0, combine four code units of the code tree block into one prediction block or residual block; or
if N = 2, directly use each code unit of the code tree block as one prediction block or residual block; or
if N = 4, partition each code unit of the code tree block into four prediction blocks or residual blocks; or
if N = 8, partition each code unit of the code tree block into 16 prediction blocks or residual blocks.

With reference to any one of the second aspect to the third possible implementation manner, in a fourth possible implementation manner, the filtering module is specifically configured to obtain the decoded reconstructed picture by performing de-blocking filtering on the reconstructed picture block.

The following beneficial effects are brought by implementing the embodiments of the present invention:
A prediction unit and a transform unit that are of different sizes are converted into a granularity of 16 x 16, 8 x 8, or 4 x 4, so that a pipeline granularity of a decoding core that supports the HEVC protocol, the VP9 protocol, or the AVS2.0 protocol equals a pipeline granularity of a decoding core that is based on a macroblock, and the decoding core in the HEVC protocol, the VP9 protocol, or the AVS2.0 may reuse some modules of a decoding core of a last generation by using a part that is in common in a video decoding process among the three protocols, which reduces module development of a new decoding core and efficiently reduces dimensions and power consumption of a multi-protocol video decoder that supports the HEVC protocol, the VP9 protocol, or the AVS2.0 protocol.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a video decoding method according to a first embodiment of the present invention;
FIG. 2 is a schematic diagram of converting a transform unit in FIG. 1;
FIG. 3 is another schematic diagram of converting a transform unit in FIG. 1;
FIG. 4 is still another schematic diagram of converting a transform unit in FIG. 1;
FIG. 5 is a schematic diagram of converting a prediction unit in FIG. 1;
FIG. 6 is another schematic diagram of converting a prediction unit in FIG. 1;
FIG. 7 is a schematic flowchart of a video decoding method according to a second embodiment of the present invention;
FIG. 8 is a schematic structural diagram of a video decoder according to a first embodiment of the present invention;
FIG. 9 is a schematic structural diagram of a video decoder according to a second embodiment of the present invention;
FIG. 10 is a schematic structural diagram of a video decoder according to a third embodiment of the present invention; and
FIG. 11 is a schematic structural diagram of a video decoder according to a fourth embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

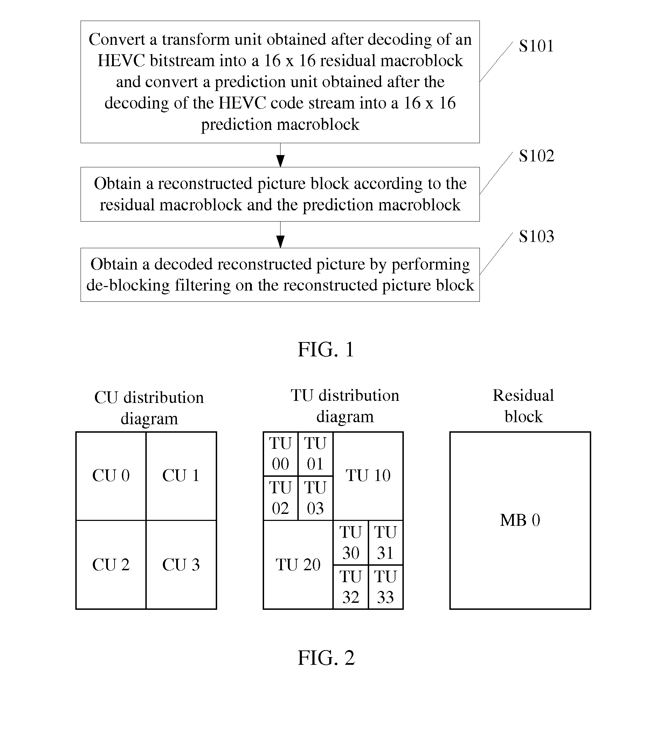

Referring to FIG. 1, FIG. 1 is a video decoding method according to an embodiment of the present invention. In this embodiment, the method includes the following steps:
S101: Respectively convert a transform unit and a prediction unit that are obtained after decoding of a video compression bitstream into an M x M residual block and an M x M prediction block, where M = 16, 8, or 4.

Specifically, on a side of a video encoder, when the video encoder performs compression processing on a video according to the HEVC protocol, the VP9 protocol, or the AVS2.0 protocol, a CTB (Code Tree Block, code tree block) is used as a basic partition unit, the CTB is a quadtree structure, each CTB includes one or four CUs (Code Unit, code unit), a size of CU partition is unfixed, each CU has zero, one, or four PUs (Prediction Unit, prediction unit), or each CU has one or four TUs (Transform Unit, transform unit). A size of the CU includes four forms: 8 x 8, 16 x 16, 32 x 32, and 64 x 64. For more definitions of the CU, PU, and TU, refer to descriptions of the existing video coding technology protocol, and details are not described again in this embodiment.

A video decoder receives a video compression bitstream from an NAL (Network Abstraction Layer, network abstraction layer) and separately obtains a prediction unit and/or a transform unit after parsing the video compression bitstream, where the video compression bitstream includes any one of a video compression bitstream, such as an HEVC bitstream, a VP9 bitstream, and an AVS2.0 bitstream. The video decoder includes two parallel processing channels, one of which is a transform channel and the other is a prediction channel. The transform unit includes residual information, the prediction unit includes prediction information, the transform unit obtained by means of parsing is processed on the transform channel, and the prediction unit is processed on the prediction channel. The video decoder performs, on the transform channel by using a size of a CTB in the video compression bitstream, a splitting operation and a combination operation on the transform unit, and respectively converts the transform unit that is on the transform channel into a residual block of an M x M size and converts the prediction unit that is on the prediction channel into a prediction block of an M x M size.

M = 16 is used as an example in the following to describe how a video decoder transforms a transform unit and a prediction unit on a transform channel and a prediction channel.

FIG. 2 shows an example of recombining CUs on a transform channel. A video decoder learns, by parsing a video compression bitstream, that a size of a CU of a to-be-decoded CTB is 8 x 8, and reads four CUs included by the to-be-decoded CTB from a cache so as to perform conversion, where the four CUs are respectively identified as CU 0, CU 1, CU 2, and CU 3, and four 8 x 8 CUs form one 16 x 16 residual block MB 0. CU 0 includes four TUs, which are TU 00, TU 01, TU 02, and TU 03, respectively; CU 1 includes one TU unit, and the TU is identified as TU 10; CU 2 includes one TU, and the TU is identified as TU 20; and CU 3 includes four TUs, and the four TUs are respectively identified as TU 30, TU 31, TU 32, and TU 33.

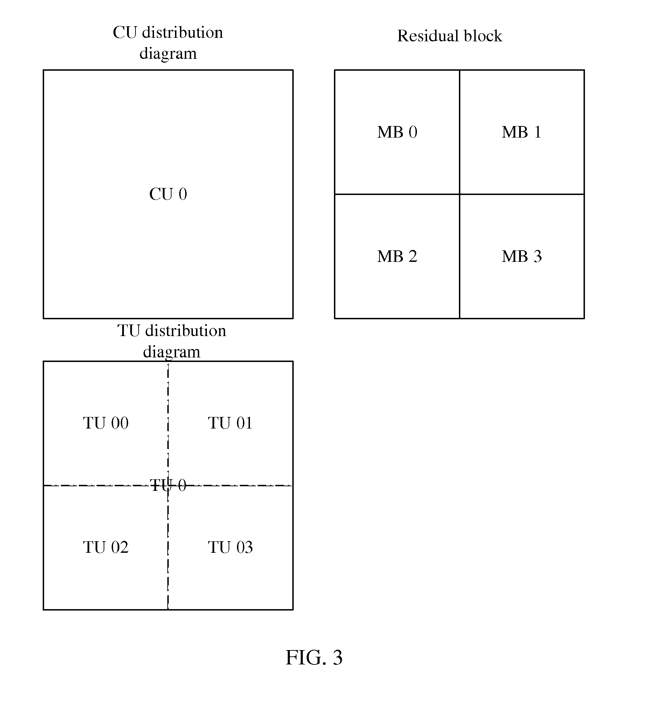

FIG. 3 shows an example of splitting a CU on a transform channel. A video decoder learns, by parsing a video compression bitstream, that a size of a CU of a to-be-decoded CTB is 32 x 32, where the CU includes one TU, and the TU is identified as TU 0; and the 32 x 32 CU is split into four 16 x 16 residual blocks, which are MB 0, MB 1, MB 2, and MB 3, respectively. After splitting, MB 0 is composed of TU 00 that is 1/4 of TU 0, MB 1 is composed of TU 01 that is 1/4 of TU 0, MB 2 is composed of TU 02 that is 1/4 of TU 0, and MB 3 is composed of TU 03 that is 1/4 of TU 0.

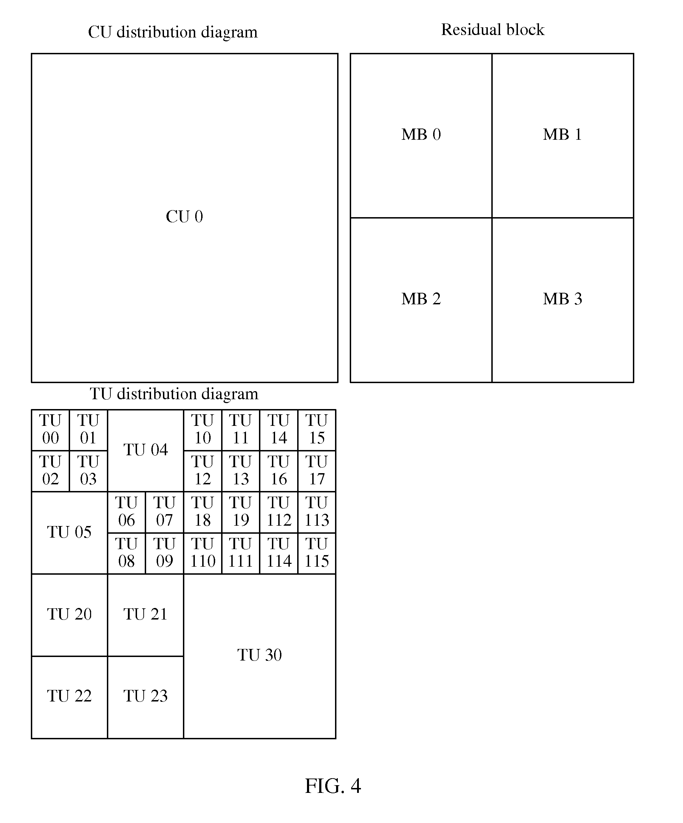

FIG. 4 shows an example of splitting a CU on a transform channel. A video decoder learns, by parsing a video compression bitstream, that a size of a CU of a to-be-decoded CTB is 32 x 32, where the CU includes 31 TUs, which are respectively identified as TU 00-TU 09, TU 10-TU 115, TU 20-TU 22, and TU 30, and the 32 x 32 CU is split into four 16 x 16 residual blocks, which are MB 0, MB 1, MB 2, and MB 3, respectively. After splitting, MB 0 is composed of TU 00-TU 09, MB 1 is composed of TU 10-TU 115, MB 2 is composed of TU 20-TU 22, and MB 3 is composed of TU 30.

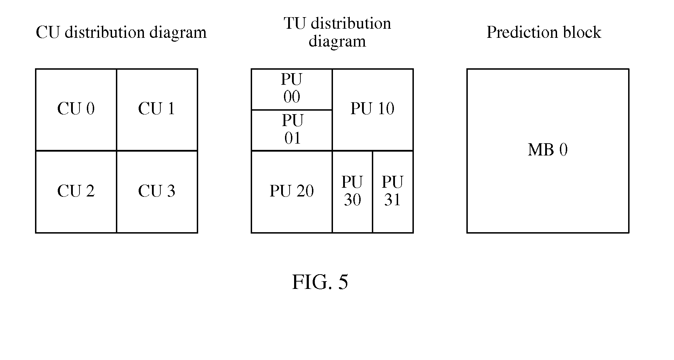

FIG. 5 shows an example of recombining CUs on a prediction channel. A video decoder learns, by parsing a video compression bitstream, that a size of a CU of a to-be-decoded CTB is 8 x 8, and reads four CUs included by the to-be-decoded CTB from a cache so as to perform conversion, where the four CUs are respectively identified as CU 0, CU 1, CU 2, and CU 3, and four 8 x 8 CUs form one 16 x 16 prediction block MB 0. CU 0 includes two PUs, which are identified as PU 00 and PU 01; CU 1 includes one PU unit, which is identified as PU 10; CU 2 includes one PU, which is identified as PU 20; and CU 3 includes two PUs, which are identified as PU 30 and PU 31.

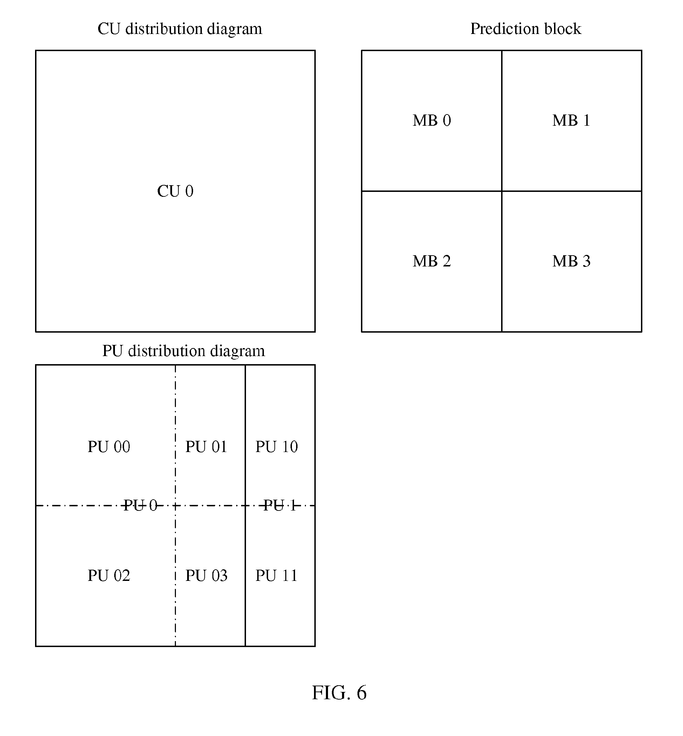

FIG. 6 shows an example of splitting a CU on a prediction channel. A video decoder learns, by parsing a video compression bitstream, that a size of a CU of a to-be-decoded CTB is 32 x 32, where the CU includes two PUs, which are respectively identified as PU 0 and PU 1, and the 32 x 32 CU is split into four 16 x 16 prediction blocks, which are MB 0, MB 1, MB 2, and MB 3, respectively. After splitting, MB 0 is composed of PU 00 that is 1/3 of PU 0; MB 1 is composed of PU 01 that is 1/6 of PU 0 and PU 10 that is 1/2 of PU 1; MB 2 is composed of PU 02 that is 1/3 of PU 0; and MB 3 is composed of PU 03 that is 1/6 of PU 0 and PU 11 that is 1/2 of PU 1.

It may be understood that, if M = 8 or 4, a video decoder may convert a code unit or a prediction unit into a granularity of M x M by using the foregoing splitting or recombination method.

A prediction unit and a transform unit that are of different sizes are converted into a granularity of 16 x 16, 8 x 8, or 4 x 4, so that a pipeline granularity of a decoding core that supports the HEVC protocol, the VP9 protocol, or the AVS2.0 protocol equals a pipeline granularity of a decoding core that is based on a macroblock, and the decoding core in the HEVC protocol, the VP9 protocol, or the AVS2.0 may reuse some modules of a decoding core of a last generation by using a part that is in common in a video decoding process among the three protocols, which reduces module development of a new decoding core and efficiently reduces dimensions and power consumption of a multi-protocol video decoder that supports the HEVC protocol, the VP9 protocol, or the AVS2.0 protocol.

S102: Obtain a reconstructed picture block according to the residual block and the prediction block.

Specifically, the reconstructed picture block is obtained after the residual block and the prediction block are weighted.

S103: Obtain a decoded reconstructed picture by performing filtering on the reconstructed picture block.

Specifically, the decoded reconstructed picture is obtained by performing filtering processing such as de-blocking filtering or adaptive filtering on the reconstructed picture block.

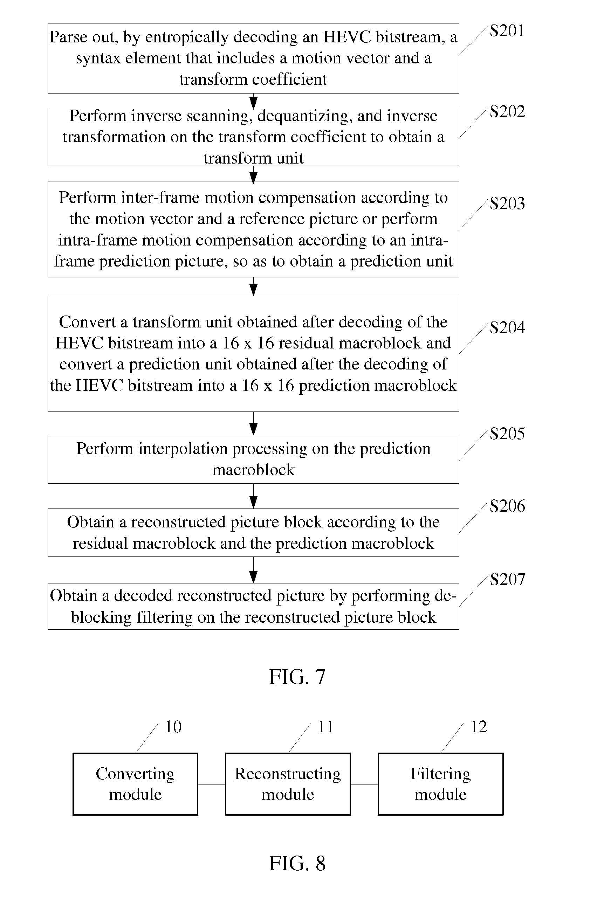

Referring to FIG. 7, FIG. 7 is another schematic flowchart of a video decoding method according to an embodiment of the present invention. In this embodiment, the method includes the following steps:
S201: Parse out, by entropically decoding a video compression bitstream, a syntax element that includes a motion vector and a transform coefficient.

Specifically, a video decoder receives a video compression bitstream from an NAL, parses out compression picture data and a parameter set such as a sequence parameter set or a picture parameter set, and obtains the syntax element such as the motion vector and the transform coefficient after performing entropy decoding.

S202: Perform inverse scanning, dequantizing, and inverse transformation on the transform coefficient to obtain a transform unit.

Specifically, the transform coefficient obtained in S201 is one-dimensional data, the video decoder converts, by performing processing of inverse scanning, dequantizing, and inverse transformation, the one-dimensional data (transform coefficient) into a two-dimensional array or matrix, that is, the transform unit, and the transform unit includes residual information about luminance and/or chrominance of a corresponding block.

S203: Perform inter-frame motion compensation according to the motion vector and a reference picture or perform intra-frame motion compensation according to an intra-frame prediction picture, so as to obtain a prediction unit.

Specifically, the prediction unit is obtained from a corresponding reference picture according to the motion vector, and in this case, the prediction unit includes inter-frame prediction information; or the prediction unit is obtained after the intra-frame motion compensation is performed according to the intra-frame prediction picture, and in this case, the prediction unit includes intra-frame prediction information.

S204: Respectively convert a transform unit and a prediction unit that are obtained after decoding of the video compression bitstream into an M x M residual block and an M x M prediction block, where M = 16, 8, or 4.

Specifically, it is specified in the HEVC protocol that there are four types of a size of a code unit, which are expressed as 2^{N} x 8 x 8, where N = 0, 2, 4, or 8; each code unit includes at least one prediction unit or at least one transform unit. M = 16, 8, or 4 is separately used as an example in the following to describe conversion of the transform unit or the prediction unit in the code unit:
Conversion is performed by using M = 16 as an example, where if N = 0, four code units of a code tree block are combined into one prediction block or residual block; or if N = 2, each code unit of a code tree block is directly used as one prediction block or residual block; or if N = 4, each code unit of a code tree block is partitioned into four prediction blocks or residual blocks; or if N = 8, each code unit of a code tree block is partitioned into 16 prediction blocks or residual blocks.

Conversion is performed by using M = 8 as an example, where if N = 0, each code unit of a code tree block is directly used as one prediction block or residual block; or if N = 2, each code unit of a code tree block is partitioned into four prediction blocks or residual blocks; or if N = 4, each code unit of a code tree block is partitioned into 16 prediction blocks or residual blocks; or if N = 8, each code unit of a code tree block is partitioned into 64 prediction blocks or residual blocks.

Conversion is performed by using M = 4 as an example, where if N = 0, each code unit of a code tree block is partitioned into four prediction blocks or residual blocks; if N = 2, each code unit of a code tree block is partitioned into eight prediction blocks or residual blocks; if N = 4, each code unit of a code tree block is partitioned into 64 prediction blocks or residual blocks; if N = 8, each code unit of a code tree block is partitioned into 256 prediction blocks or residual blocks.

S205: Perform pixel interpolation processing on the prediction block.

Specifically, an interpolation point is determined by adjacent pixels, and an interpolation is completed by a filter according to a protocol standard.

S206: Obtain a reconstructed picture block according to the residual block and the prediction block.

Specifically, the reconstructed picture block is obtained by performing weighting processing on the residual block that includes residual information and the prediction block that includes prediction information.

S207: Obtain a decoded reconstructed picture by performing filtering on the reconstructed picture block (such as de-blocking effect filtering or adaptive compensation filtering).

A prediction unit and a transform unit that are of different sizes are converted into a granularity of 16 x 16, 8 x 8, or 4 x 4, so that a pipeline granularity of a decoding core that supports the HEVC protocol, the VP9 protocol, or the AVS2.0 protocol equals a pipeline granularity of a decoding core that is based on a macroblock, and the decoding core in the HEVC protocol, the VP9 protocol, or the AVS2.0 may reuse some modules of the decoding core that is based on the macroblock by using a part that is in common in a video decoding process among the three protocols, which reduces module development of a new decoding core and efficiently reduces dimensions and power consumption of a multi-protocol video decoder that supports the HEVC protocol, the VP9 protocol, or the AVS2.0 protocol.

Referring to FIG. 8, FIG. 8 is a schematic structural diagram of a video decoder according to an embodiment of the present invention. In this embodiment, the video decoder includes a converting module 10, a reconstructing module 11, and a filtering module 12.

The converting module 10 is configured to respectively convert a transform unit and a prediction unit that are obtained after decoding of a video compression bitstream into an M x M residual block and an M x M prediction block, where M = 16, 8, or 4.

Specifically, on a side of a video encoder, when the video encoder performs HEVC compression processing on a video, a CTB (Code Tree Block, code tree block) is used as a basic partition unit, the CTB is a quadtree structure, each CTB includes one or four CUs (Code Unit, code unit), a size of CU partition is unfixed, each CU has zero, one, or four PUs (Prediction Unit, prediction unit), or each CU has one or four TUs (Transform Unit, transform unit). A size of the CU includes four forms: 8 x 8, 16 x 16, 32 x 32, and 64 x 64.

The video decoder receives a video compression bitstream from an NAL and separately obtains a transform unit and a prediction unit after parsing the video compression bitstream, and the video decoder includes two parallel processing channels, one of which is a transform channel and the other is a prediction channel. The transform unit includes residual information, the prediction unit includes prediction information, the transform unit obtained by means of parsing is processed on the transform channel, and the prediction unit is processed on the prediction channel. The converting module 10 performs, by using a size of a CTB in the video compression bitstream, a splitting operation and a combination operation on the transform unit on the transform channel, respectively converts the transform unit that is on the transform channel into a residual block of an M x M size, and converts the prediction unit that is on the prediction channel into a prediction block of an M x M size.

The reconstructing module 11 is configured to obtain a reconstructed picture block according to the residual block and the prediction block.

The filtering module 12 is configured to obtain a decoded reconstructed picture by performing filtering (such as de-blocking effect filtering and adaptive compensation) on the reconstructed picture block.

This embodiment of the present invention and method embodiment 1 are based on a same conception. For a detailed process, refer to the descriptions in the method embodiment 1, and no further details are provided herein.

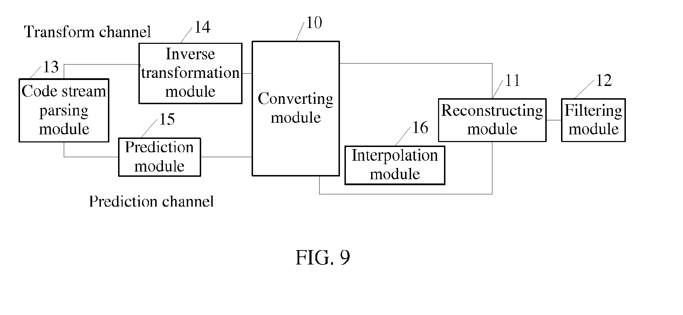

Further, referring to FIG. 9, FIG. 9 is a schematic structural diagram of a video decoder according to an embodiment of the present invention. In this embodiment, the video decoder includes a bitstream parsing module 13, an inverse transformation module 14, a prediction module 15, and an interpolation module 16, in addition to the converting module 10, the reconstructing module 11, and the filtering module 12.

The bitstream parsing module 13 is configured to parse out, by entropically decoding the video compression bitstream, a syntax element that includes mode information, a motion vector, and a transform coefficient.

The inverse transformation module 14 is configured to perform inverse scanning, dequantizing, and inverse transformation on the transform coefficient to obtain a transform unit.

The prediction module 15 is configured to perform inter-frame motion compensation according to the motion vector and a reference picture or perform intra-frame motion compensation according to an intra-frame prediction picture, so as to obtain a prediction unit.

The interpolation module 16 is configured to perform interpolation processing on the prediction block, and transfer the prediction block after interpolation processing to the reconstructing module.

Optionally, M = 16, and the converting module is configured to acquire multiple code units from a to-be-decoded code tree block, where a size of each code unit is 2^{N} x 8 x 8, and N = 0, 2, 4, or 8; each code unit includes at least one prediction unit or at least one transform unit;
if N = 0, combine four code units of the code tree block into one prediction block or residual block; or
if N = 2, directly use each code unit of the code tree block as one prediction block or residual block; or
if N = 4, partition each code unit of the code tree block into four prediction blocks or residual blocks; or
if N = 8, partition each code unit of the code tree block into 16 prediction blocks or residual blocks.

This embodiment of the present invention and method embodiment 2 are based on a same conception. For a detailed process, refer to the descriptions in the method embodiment 2, and no further details are provided herein.

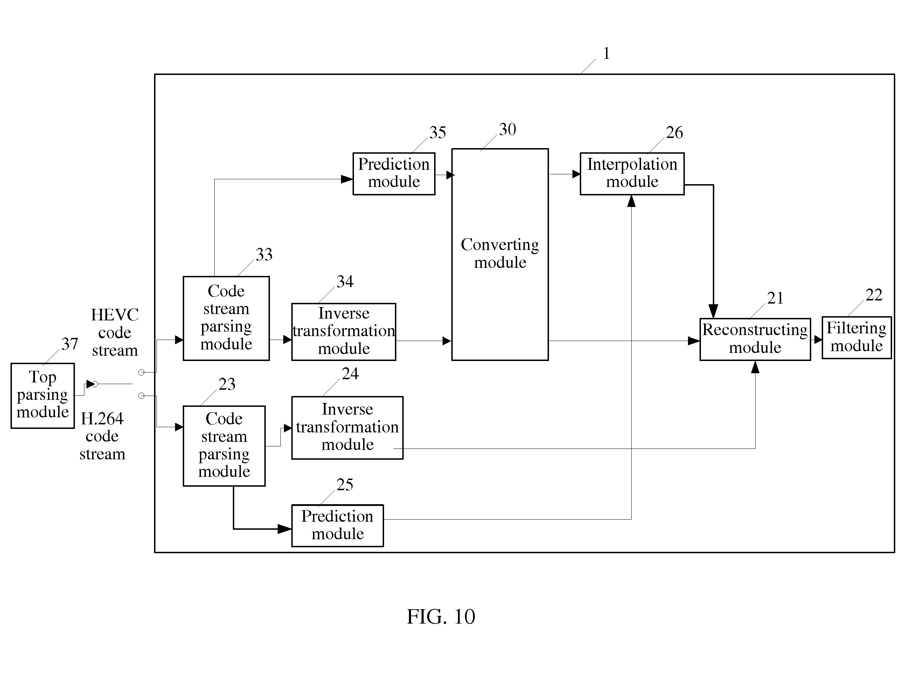

Referring to FIG. 10, FIG. 10 is a schematic structural diagram of a multi-protocol video decoder according to an embodiment of the present invention. In this embodiment, the video decoder supports the HEVC protocol and the H.264 protocol, the multi-protocol video decoder includes two decoding cores: an H.264 decoding core and an HEVC decoding core, where the H.264 decoding core includes a bitstream parsing module 23, an inverse transformation module 24, a prediction module 25, an interpolation module 26, a reconstructing module 21, and a filtering module 22; the HEVC decoding core includes a bitstream parsing module 33, an inverse transformation module 34, a prediction module 35, a converting module 30, the interpolation module 26, the reconstructing module 21, and the filtering module 22. A top parsing module 37 is configured to identify a format of a video compression bitstream, where if the video compression bitstream is an H.264 bitstream, the video compression bitstream is sent to the H.264 decoding core for video decoding, the H.264 decoding core respectively performs prediction processing and transforming processing on a prediction channel and a transform channel by using methods in the H.264 protocol, and a 16 x 16 macroblock is obtained after the prediction processing or the transforming processing; if the video compression bitstream is an HEVC bitstream, the video compression bitstream is sent to the HEVC decoding core for decoding, and the HEVC decoding core converts an obtained prediction unit into an M x M prediction block on a prediction channel, and converts an obtained transform unit into an M x M residual block on a transform channel at the same time. After conversion of the foregoing pipeline granularity, the HEVC decoding core may reuse the interpolation module 26, the reconstructing module 21, and the filtering module 22 of the H.264 decoding core. Similarly, a VP9 decoding core and an AVS2.0 decoding core may also reuse the interpolation module 26, the reconstructing module 21, and the filtering module 22 of the H.264 decoding core. In this way, development of some modules of the multi-protocol video decoder is reduced, chip dimensions and power consumption of the multi-protocol video decoder is reduced, and a development period is shortened.

The foregoing video decoder may be integrated on an integrated circuit substrate by using a production process of an integrated circuit.

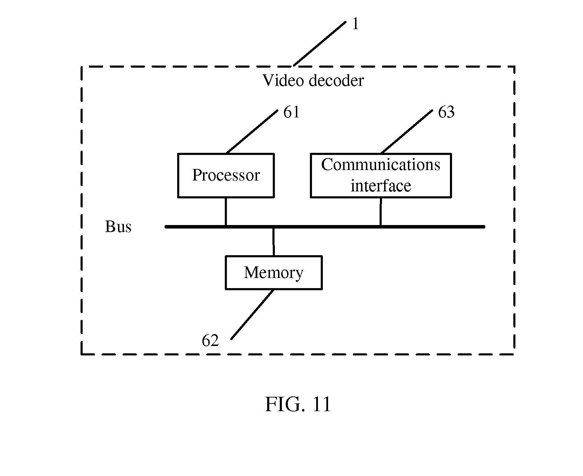

Correspondingly, referring to FIG. 11, a fourth embodiment of the present invention further provides a video decoder. In this embodiment, a decoder 1 includes a processor 61, a memory 62, and a communications interface 63, where the communications interface 63 is configured to communicate with an external device. There may be one or more processors 61 in the decoder 1, and one processor is used as an example in FIG. 11. In some embodiments of the present invention, the processor 61, the memory 62, and the communications interface 63 may be connected to each other by using a bus or other manners, and a bus connection is used as an example in FIG. 11.

The memory 62 stores a group of program code, and the processor 61 is configured to invoke the program code stored in the memory 62, so as to implement the following operations:
respectively converting a transform unit and a prediction unit that are obtained after decoding of a video compression bitstream into an M x M residual block and an M x M prediction block, where M = 16, 8, or 4, and the video compression bitstream includes any one of a High Efficiency Video Coding HEVC bitstream, a VP9 bitstream, and an Audio Video Standard AVS2.0 bitstream;
obtaining a reconstructed picture block according to the residual block and the prediction block; and
obtaining a decoded reconstructed picture by performing filtering on the reconstructed picture block.

In this embodiment of the present invention, the processor 61 is further configured to: parse out, by entropically decoding the video compression bitstream, a syntax element that includes a motion vector and a transform coefficient;
perform inverse scanning, dequantizing, and inverse transformation on the transform coefficient to obtain the transform unit; and
perform inter-frame motion compensation according to the motion vector and a reference picture or perform intra-frame motion compensation according to an intra-frame prediction picture, so as to obtain the prediction unit.

In some embodiments of the present invention, M = 16, and the respectively converting a transform unit and a prediction unit that are obtained after decoding of a video compression bitstream into an M x M residual block and an M x M prediction block, which is implemented by the processor 61, specifically includes:
acquiring multiple code units of a to-be-decoded code tree block, where a size of each code unit is 2^{N} x 8 x 8, and N = 0, 2, 4, or 8; each code unit includes at least one prediction unit or at least one transform unit;
if N = 0, combining four code units of the code tree block into one prediction block or residual block; or
if N = 2, directly using each code unit of the code tree block as one prediction block or residual block; or
if N = 4, partitioning each code unit of the code tree block into four prediction blocks or residual blocks; or
if N = 8, partitioning each code unit of the code tree block into 16 prediction blocks or residual blocks.

In some embodiments of the present invention, the processor 61 is further configured to perform pixel interpolation processing on the prediction block.

In some embodiments of the present invention, the obtaining a decoded reconstructing picture by performing filtering on the reconstructed picture block, which is implemented by the processor 61, specifically includes:
obtaining the decoded reconstructed picture by performing de-blocking filtering on the reconstructed picture block.

When this embodiment of the present invention is implemented, a prediction unit and a transform unit that are of different sizes are converted into a granularity of 16 x 16, 8 x 8, or 4 x 4, so that a pipeline granularity of a decoding core that supports the HEVC protocol, the VP9 protocol, or the AVS2.0 protocol equals a pipeline granularity of a decoding core that is based on a macroblock, and the decoding core in the HEVC protocol, the VP9 protocol, or the AVS2.0 may reuse some modules of the decoding core that is based on the macroblock by using a part that is in common in a video decoding process among the three protocols, which reduces module development of a new decoding core and efficiently reduces an area and power consumption of a multi-protocol video decoder that supports the HEVC protocol, the VP9 protocol, or the AVS2.0 protocol.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What is disclosed above is merely exemplary embodiments of the present invention, and certainly is not intended to limit the protection scope of the present invention. A person of ordinary skill in the art may understand that all or some of processes that implement the foregoing embodiments and equivalent modifications made in accordance with the claims of the present invention shall fall within the scope of the present invention.

## Claims

1. A video decoding method, comprising:
respectively converting a transform unit and a prediction unit that are obtained after decoding of a video compression bitstream into an M x M residual block and an M x M prediction block, wherein M = 16, 8, or 4, and the video compression bitstream comprises any one of a High Efficiency Video Coding, HEVC, bitstream, a VP9 bitstream, and an Audio Video Standard AVS2.0 bitstream; (S101, S204)
obtaining a reconstructed picture block according to the residual block and the prediction block; (S102, S206) and
obtaining a decoded reconstructed picture by performing filtering on the reconstructed picture block. (S103, S207)

2. The method according to claim 1, before the step of respectively converting a transform unit and a prediction unit that are obtained after decoding of a video compression bitstream into an M x M residual block and an M x M prediction block, further comprising:
parsing out, by entropically decoding the video compression bitstream, a syntax element that comprises a motion vector and a transform coefficient;(S201)
performing inverse scanning, dequantizing, and inverse transformation on the transform coefficient to obtain the transform unit; (S202) and
performing inter-frame motion compensation according to the motion vector and a reference picture or performing intra-frame motion compensation according to an intra-frame prediction picture, so as to obtain the prediction unit.(S203)

3. The method according to claim 1 or 2, wherein M = 16, and the respectively converting a transform unit and a prediction unit that are obtained after decoding of a video compression bitstream into an M x M residual block and an M x M prediction block specifically comprises:
acquiring multiple code units of a to-be-decoded code tree block, wherein a size of each code unit is 2^{N} x 8 x 8, and N = 0, 2, 4, or 8; each code unit comprises at least one prediction unit or at least one transform unit;
if N = 0, combining four code units of the code tree block into one prediction block or residual block; or
if N = 2, directly using each code unit of the code tree block as one prediction block or residual block; or
if N = 4, partitioning each code unit of the code tree block into four prediction blocks or residual blocks; or
if N = 8, partitioning each code unit of the code tree block into 16 prediction blocks or residual blocks.

4. The method according to claim 3, after the respectively converting a transform unit and a prediction unit that are obtained after decoding of a video compression bitstream into an M x M residual block and an M x M prediction block, further comprising:
performing pixel interpolation processing on the prediction block.

5. The method according to any one of claims 1 to 4, wherein the obtaining a decoded reconstructed picture by performing filtering on the reconstructed picture block specifically comprises:
obtaining the decoded reconstructed picture by performing de-blocking filtering on the reconstructed picture block. (S205)

6. A video decoder, comprising:
a converting module (10), configured to respectively convert a transform unit and a prediction unit that are obtained after decoding of a video compression bitstream into an M x M residual block and an M x M prediction block, wherein M = 16, 8, or 4, and the video compression bitstream comprises any one of an HEVC bitstream, a VP9 bitstream, and an AVS2.0 bitstream;
a reconstructing module (11), configured to obtain a reconstructed picture block according to the residual block and the prediction block; and
a filtering module (12), configured to obtain a decoded reconstructed picture by performing de-blocking filtering on the reconstructed picture block.

7. The video decoder according to claim 6, further comprising:
a bitstream parsing module (13), configured to parse out, by entropically decoding the video compression bitstream, a syntax element that comprises a motion vector and a transform coefficient;
an inverse transformation module (14), configured to perform inverse scanning, dequantizing, and inverse transformation on the transform coefficient to obtain the transform unit; and
a prediction module (15), configured to perform inter-frame motion compensation according to the motion vector and a reference picture or perform intra-frame motion compensation according to an intra-frame prediction picture, so as to obtain the prediction unit.

8. The video decoder according to claim 6 or 7, wherein M = 16, and the converting module is specifically configured to acquire multiple code units of a to-be-decoded code tree block, wherein a size of each code unit is 2^{N} x 8 x 8, and N = 0, 2, 4, or 8; each code unit comprises at least one prediction unit or at least one transform unit;
if N = 0, combine four code units of the code tree block into one prediction block or residual block; or
if N = 2, directly use each code unit of the code tree block as one prediction block or residual block; or
if N = 4, partition each code unit of the code tree block into four prediction blocks or residual blocks; or
if N = 8, partition each code unit of the code tree block into 16 prediction blocks or residual blocks.

9. The video decoder according to claim 8, further comprising:
an interpolation module (16), configured to perform pixel interpolation processing on the prediction block, and transfer a prediction block after interpolation processing to the reconstructing module.

10. The video decoder according to any one of claims 6 to 9, wherein the filtering module is configured to obtain the decoded reconstructed picture by performing de-blocking filtering on the reconstructed picture block.
